# EUROPEAN PATENT APPLICATION

(11) **EP 4 838 087 A1**
(43) Date of publication of application: **11.11.2026**
(21) Application number: 25175085.7
(22) Date of filing: 08.05.2025
(51) Int. Cl.: F03D 1/00, F03D 13/40

(54) **TRANSPORT SYSTEM, FIRST AND SECOND TRANSPORT FRAME, AND METHOD OF TRANSPORTING A NACELLE OR A NACELLE MODULE**

(71) Applicant: Nordex Energy SE & Co. KG, 22419 Hamburg (DE)
(72) Inventor: Wackrow, Torsten, 22419 Hamburg (DE)
(74) Representative: Epping - Hermann - Fischer

(57) **Abstract**

The disclosure relates to a transport system for the transport of a nacelle (106) or a nacelle module (200,202), comprising:
a nacelle (106) or nacelle module (200,202) with an inner structure (240),
a first transport frame (220) attached to the inner structure (240),
a second transport frame (222) attached to the inner structure (240) or to a main frame (250) attached to the nacelle or nacelle module,
wherein the first and second transport frame (220,222) have a carrier interface (224) for a lift adaptor (226,228).

The disclosure further relates a first and second transport frame (220,222), and method of transporting a nacelle or a nacelle module.

## Description

This invention relates generally to wind turbines and more particularly to a transport system of a nacelle or nacelle modules of the wind turbine that facilitates a transport of the nacelles or nacelle modules.

In a typical wind turbine installation, various components of the wind turbine, such as a nacelle, the tower or tower sections, the rotor hub, the rotor blades etc. may be transported to the installation site separately and then assembled together on site so as to result in an operational wind turbine. Due to the relatively large size of some of these components, the transportation thereof is typically carried out using one or more tractor trailers which travel along an existing network of roads to the installation site. The movement of various wind turbine components along the existing network of roads is a very important aspect of wind turbine installation, especially as the size of wind turbine components continues to increase.

More particularly, during transport of a wind turbine component it may be necessary to manipulate the component being transported in order to safely navigate the roadways.

In one aspect, it is provided a
transport system for the transport of a nacelle or a nacelle module wherein the nacelle or nacelle module comprises an inner structure, the system comprising:
a first transport frame configured to be attached to the inner structure,
a second transport frame configured to be attached to the inner structure or to a main frame attached to the nacelle or nacelle module,
wherein the first and second transport frames have a carrier interface for a lift adaptor.

By attaching the first and second transport frames to the inner structure of the nacelle or nacelle module, the stability of the inner structure of the nacelle or nacelle module can be used to transport the nacelle or nacelle module.

The inner structure of the nacelle or nacelle module may include a lower support structure, an upper support structure and lateral support structures.

The inner structure of the nacelle or nacelle module may comprise a box-like shape.

The lower support structure, the upper support structure and/or the lateral support structures may comprise latticelike or cross-bar structures.

The lower support structure and the upper support structure may comprise first horizontal elements, and second horizontal elements configured to be joined conforming a 90° angle between them.

The lower support structure and the upper support structure may comprise 2 first horizontal elements, and 2 second horizontal elements configured to be joined in the shape of a rectangle.

The lower support structure and the upper support structure may comprise additional horizontal elements, configured to be located in a plane of the horizontal rectangle, adjoining the first or second horizontal elements.

The lateral support structures may comprise lateral elements, configured to adjoin horizontal elements of the lower and upper structure.

Such lateral elements may be disposed perpendicular to the horizontal elements. Lateral elements may also be located forming angles different from 90° with the horizontal elements or other lateral elements. Lateral elements may be located parallel to the upper or lower support structure.

The inner structure may comprise a connecting portion configured to be connected to a main frame.

The main frame may include a yaw plate, configured to be connected to the tower.

The connecting portion may connect to lateral elements of the lateral support structure of the inner structure.

The connecting portion may abut or be connected to the lower support structure of the inner structure.

The connecting portion may abut or be connected to the upper support structure of the inner structure.

The connecting portion may comprise lateral connecting elements in the plane of the lateral support structure.

Nacelle modules may, for example be arranged above each other or parallel to each other in the installed state to build the nacelle.

Optionally, the inner structure of the nacelle or nacelle module is made out of steel to provide maximum stability of the inner structure.

Optionally, the inner structure of the nacelle or nacelle module comprises a front end and a rear end located opposite each other along a longitudinal direction of the nacelle or nacelle module, first and second sides located opposite each other along a transversal direction of the nacelle or nacelle module and top and bottom sides located opposite each other along a height of the nacelle or nacelle module. The inner structure of the nacelle or nacelle module comprises a front end area and a rear end area located opposite each other along a longitudinal direction of the nacelle or nacelle module and comprising the front end or rear end and adjacent areas of the first and second sides and of the top and bottom sides.

Optionally, the first transport frame is attached to the rear end area of the inner structure and the second transport frame is attached to a front end area of the inner structure of the nacelle or nacelle module or to a main frame attached to the nacelle or nacelle module.

In the case that a main frame is attached to the nacelle or nacelle module, a lower transport frame is optionally attached to the bottom side of the main frame and the second transport frame is attached to the lower transport frame.

Optionally, the main frame comprises a protruding portion and the second transport frame is attached to this protruding portion of the main frame and to the lower transport frame.

Optionally, the transport system comprises a transport equipment with two lift adaptors connected to a carrier interface of the first and second transport frames. With the two lift adaptors, the nacelle or nacelle module can be lifted from the ground for transport to the installation site.

In another aspect, it is provided a first or second transport frame for use in a transport system as explained above. Optionally, the structure of the transport frames is rectangular or has any other appropriate shape.

Optionally, the first and second transport frames comprise a connecting interface for the inner structure of the nacelle or nacelle module. By this connecting interface the first and second transport frames can be connected to the inner structure of the nacelle or nacelle module

In another aspect, it is provided a method of transporting a nacelle or a nacelle module comprising:
- providing a first transport frame and a second transport frame,
- attaching the first transport frame to the rear end area of a nacelle or nacelle module,
- attaching the second transport frame to the front end area of the nacelle or nacelle module or to a main frame attached to the nacelle or nacelle module,
- attaching the first and second transport frames to a lift adaptor of a transport equipment,
- lifting by the lift adaptor the nacelle or nacelle module and
- transporting the nacelle or nacelle module.

Further features and further developments are set out by the following exemplary embodiments, which are explained in conjunction with the attached figures. The same or similar elements or elements acting in the same way are provided with the same reference numerals in the following figures, even if they belong to different embodiments.
Figure 1 shows the main components of a wind turbine;
Figure 2 shows an example of transport with two lift adaptors;
Figure 3 shows, in side view, a lower nacelle module with a first and second transport frame;
Figure 4 shows, in side view, Figure 3 without the housing of the lower nacelle module;
Figure 5 shows, in side view, a nacelle module with a transparent housing with attached first and second transport frame;
Figure 6 shows the first and second transport frame in perspective view; and
Figure 7 shows a part of the lower transport frame and connector frame in perspective view.

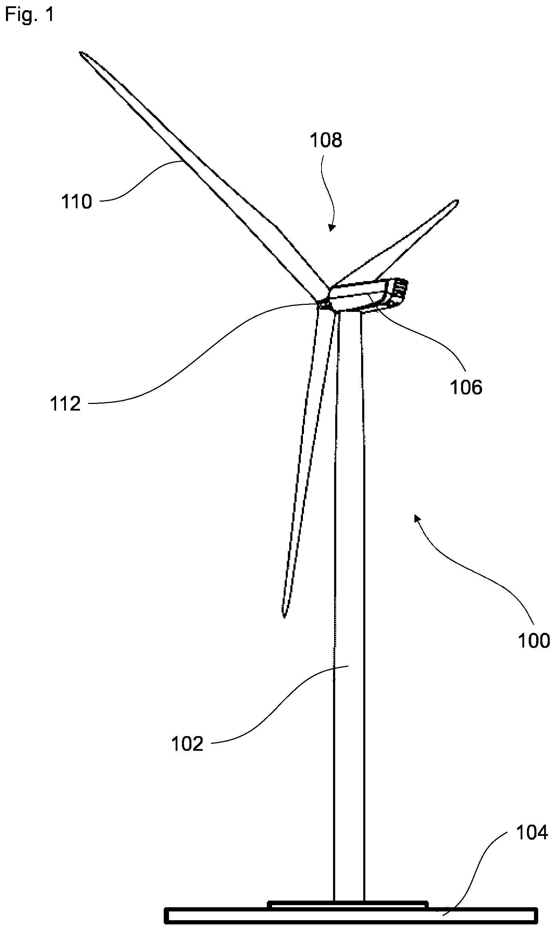

Figure 1 shows a schematic view of a wind turbine 100, which comprises a tower 102. The tower 102 is fixed to the ground by means of a foundation 104. A nacelle 106 is rotatably mounted at one end of the tower 102 opposite to the ground.

The nacelle 106, for example, comprises a generator which is coupled to a rotor via a rotor shaft. The rotor 108 comprises one or more (wind turbine) rotor blades 110, which are movably arranged on a rotor hub 112. During operation, the rotor 108 is set in rotation by an airflow, for example wind interacting with blades 110, resulting in forces acting on the blades 110. This rotational movement is transmitted to the generator via a transmission supporting the rotor shaft, with or without a gearbox. The generator converts the mechanical energy of the rotor 108 into electrical energy.

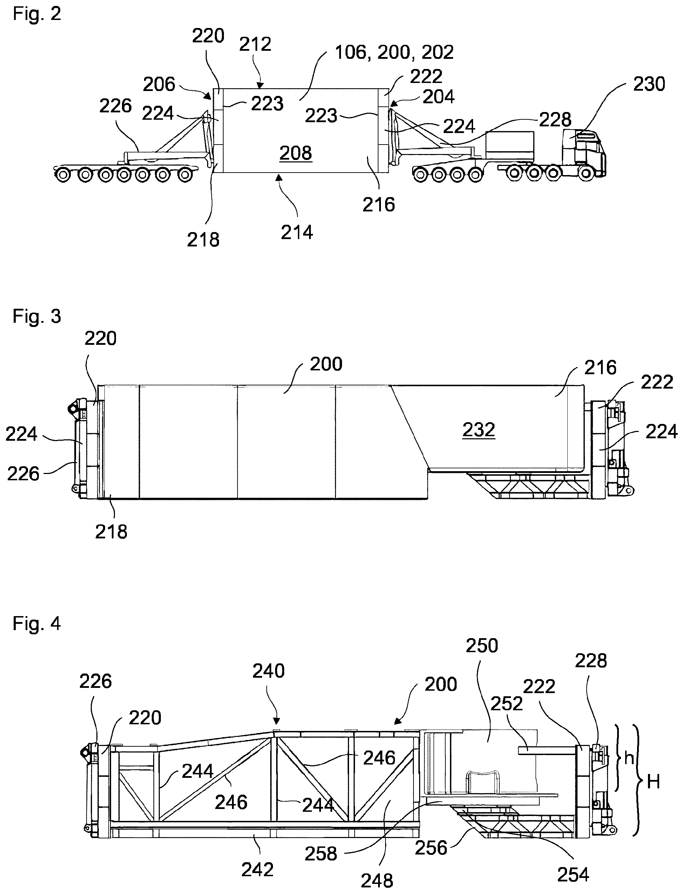

Figure 2 shows, in side view, an example of a transport system for the transport of a nacelle 106 or a nacelle module 200 or 202. The inner structure of the nacelle or nacelle module comprise a front end 204 and a rear end 206 located opposite each other along a longitudinal direction of the nacelle or nacelle module. The inner structure of the nacelle or nacelle module comprise a first side 208 and a second side 210(hidden in Figure 2) located opposite each other along a transversal direction of the nacelle or nacelle module.

Further, the inner structure of the nacelle or nacelle module comprise a top side 212 and a bottom side 214 located opposite each other along a height of the nacelle 106 or the nacelle module 200 or 202. The inner structure of the nacelle or nacelle module further comprises a front end area 216 and a rear end area 218 located opposite each other along a longitudinal direction of the nacelle or nacelle module and comprising the front end or rear end and the adjacent areas of the first and second sides 208, 210 and of the top and bottom sides 212 and 214.

In this example, a first transport frame 220 is attached to the rear end area 218 and a second transport frame 222 is attached to the front end area 216. Each transport frame 220 and 222 comprises a so-called connecting interface 223 for the connection to the nacelle or nacelle module and carrier interface 224 to which a lift adaptor, usually a hydraulic lift adaptor, can be connected. In Figure 2 one lift adaptor 226 is connected to the first transport frame 220 at the rear end area 218 and another lift adaptor 228 is connected to the second transport frame 222 located at the front end area 216 of the nacelle or nacelle module 200, 202. The lift adaptors are supported on trailers with a number of axles depending on the weight of the nacelle or nacelle module. They are pulled by a lorry 230 for the transport of the nacelle or nacelle module.

Figure 3 shows, in side view, another embodiment of the present disclosure. Figure 3 shows, in side view, a nacelle module 200 with a first transport frame 220 attached to the rear end area 218 and a second transport frame 222 attached to the front end area 216. The first transport frame 220 and the second transport frame 222 are connected through the carrier interface 224 with the rear lift adaptor 226 and the front lift adaptor 228. From the rear lift adaptor 226 and the front lift adaptor 228 only the part which is attached to the carrier interface 224 is shown in Figure 3. In Figure 3 the nacelle module 200 is shown with a cover 232.

Figure 4 shows the view of Figure 3 without the cover 232. The nacelle 200 comprises an inner structure 240 which comprises a base frame 242, vertical beams 244, diagonal beams 246, as well as horizontal beams not shown in Figure 4, which together build a compartment of the lower nacelle module. The inner structure 240 is for example made out of steel to provide the nacelle module with the necessary stability when mounted to the tower or during transport.

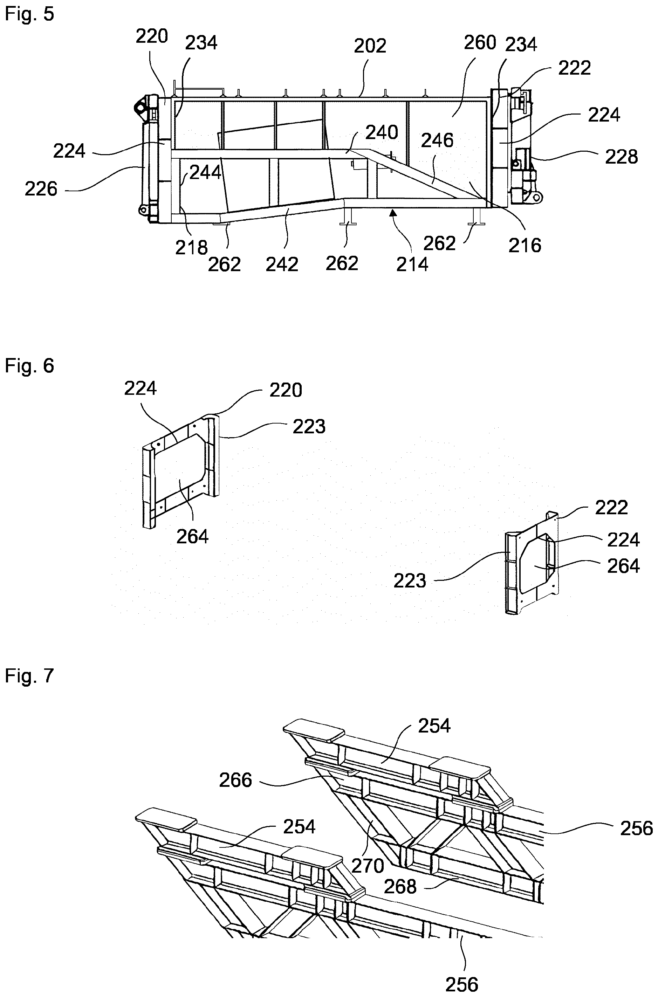

The inner structure 240 further comprises a connecting portion 248 to which a main frame 250 is connected. The main frame 250 is mounted in the installed state on top of the tower 102 of the wind turbine 100. In the installed state the main frame 250 supports the nacelle module 200 and optionally the further nacelle module 202 (explained with reference to Figure 5) and a transmission assembly of the wind turbine (not shown in the figures). The main frame 250 is for example made of steel, especially cast steel. The connecting portion 248 of the nacelle module 200 may be a reinforced part of the inner structure 240. The nacelle module 200 and the main frame 250 are fixed together by bolts, screws or other connecting means. In this example the main frame 250 comprises a protruding portion 252 which extends from the main frame 250 to the opposite side where the nacelle cover 200 is mounted. The protruding portion 252 may be integrally formed with the main frame and located in the upper part of the main frame, which means higher than the middle of the height h of the main frame. In this example the height h of the main frame is smaller than the height H of the nacelle module 200 at the front end 204. The top surfaces of the nacelle module 200 and the main frame are on the same level.

Other configurations of the main frame and locations of the protruding portion 252 are also possible.

In this example, a connecting frame 254 is arranged below the main frame and a lower transport frame 256 is arranged below the connecting frame 254. The connecting frame 254 is connected to an inner bearing ring 258 of the main frame 250. Optionally a stiffening steel plate is arranged between the connecting frame 254 and the inner bearing ring 258. The second transport frame 222 is attached to the protruding portion 252 and to the lower transport frame 256. As the main frame has a lower height h than the heigt H of the nacelle module 200, the connecting frame 254 and the lower transport frame 256 can be placed below the bottom surface of the main frame 250 and can serve for the vertical second transport frame 222 to be fixed.

Figure 5 shows, in side view, another embodiment of the invention. In the embodiment shown in Figure 5, the second nacelle module 202, which is placed in the installed state above the first nacelle module 200, is shown. The second nacelle module 202 also has an inner structure 240 with vertical beams 244, diagonal beams 246 and a base frame 242 and the inner structure 240 is also made out of steel to provide a stable compartment for the nacelle module 202. The nacelle module 202 shown in Figure 5 comprises a transparent housing 260 so that the inner structure 240 can be seen.

A first transport frame 220 is attached to the rear end area 218 of the nacelle module 212. A second transport frame 222 is attached to the front end area 216 of the nacelle module 202. The rear lift adaptor 226 is connected to the carrier interface 224 of the first transport frame 220 and front lift adaptor 228 is also connected to the carrier interface 224 of the second transport frame 222. On the bottom side 214 transport frames 262 may be arranged for placing the nacelle module 202 on the ground. For the installation of the nacelle module 202 on top of the nacelle module 200, the transport frames 262 may be removed.

Figure 6 shows a perspective view of the first transport frame 220 and also of the second transport frame 222. For example, both transport frames 220 and 222 are made out of steel and comprise a rigid rectangular structure with an opening 264 within the regular structure. Both transport frames 220 and 222 comprise a carrier interface 224. The carrier interface 224 is compatible with the lift adapters of the trailer manufacturers, that have their own interfaces.

The first transport frame 220 is attached to the rear end 206 of the inner structure 240 of the nacelle or nacelle module by the conecting interface 223. The second transport frame 222 is also attached to the inner structure 240 of the nacelle or nacelle module by the conecting interface 223 (see embodiment of Figure 2 and Figure 5).

Alternatively the second transport frame 222 is attached to the protruding portion 252 of the main frame 250 and the lower transport frame 256. The connections may be bolted connections. For example, the nacelle connection areas 234 may be lug-type thick plates with bolts in the inner support structure corresponding to the connection interfaces 223 in the first and second transport frame 220,222. The first and second transport frames 220, 222 may be used for different nacelle dimensions by locating the nacelle connection areas 234 appropriately.

Figure 7 shows a perspective view of a part of the lower transport frame 256. As can be seen in Figure 7, two lower transport frames 256 are used which are placed in a longitudinal direction of the nacelle module 200. Above the lower transport frames 256, two connection frames 254 are placed which can be attached to the bottom side of the main frame 250, especially to the inner bearing ring 258. For example, the lower transport frames 252, as well as the connection frames 254, are made out of steel. In this example, the lower transport frames comprise an upper member 266, a lower member 268 and diagonal members 270 between the upper member 266 and the lower member 268.

At the front end the lower transport frame 256 may comprise a vertical end to which the second transport frame 222 can be fixed by a bolted connection.

At the rear end the lower transport frame 256 and also the connection frame 354 comprise an angled shape for saving material and weight. Other shapes of the rear end of the lower transport frame 256 and the connection frame 354 are also possible.

The first transport frame 220 or the second transport frame 222 are connected to the front end 204 or the rear end 206 of the nacelle or nacelle module. The first transport frame and/or the second transport frame can also be constructed to be fixed at the front end area or the rear end area which means also to the top side, the bottom side or the first or second side of the nacelle or nacelle module adjacent to the front end or the rear end.

For transporting the nacelle or nacelle module according to the present disclosure the following steps are performed:
- The first transport frame 220 and the second transport frame 222 are provided.
- The first transport frame 220 is attached to the rear end 204 of the nacelle 106 or nacelle module 200, 202.
- The second transport frame 222 is attached to the front end area 216 of the nacelle 106 or nacelle module 200 or alternatively to a main frame 250 attached to the nacelle or nacelle module.
- The first and second transport frames 220, 222 are attached to a lift adaptor 226, 228 of transport equipment.
- The nacelle or nacelle module is then lifted by the lift adaptor 226, 222 and can then be transported on the roadways, for example to the installation site or a storage area.

### List of reference signs

- 100: wind turbine
- 102: tower
- 104: foundation
- 106: nacelle
- 108: rotor
- 110: rotor blade
- 112: rotor hub
- 200: nacelle module
- 202: nacelle module
- 204: front end
- 206: rear end
- 208: first side
- 210: second side
- 212: top side
- 214: bottom side
- 216: front end area
- 218: rear end area
- 220: first transport frame
- 222: second transport frame
- 223: connecting interface
- 224: carrier interface
- 226: rear lift adaptor
- 228: front lift adaptor
- 230: lorry
- 232: cover of the nacelle module 202
- 234: nacelle connection areas
- 240: inner structure
- 242: base frame
- 244: vertical beam
- 246: diagonal beam

- 248: connecting portion
- 250: main frame
- h: height of the main frame
- H: height of the nacelle module 202
- 252: protruding portion
- 254: connecting frame
- 256: lower transport frame
- 258: inner bearing ring
- 260: housing of the second nacelle module 202
- 262: transport frame
- 264: opening in the transport frame
- 266: upper member
- 268: lower member
- 270: diagonal member

## Claims

1. A transport system for the transport of a nacelle (106) or a nacelle module (200,202) wherein the nacelle (106) or nacelle module (200,202) comprises an inner structure (240), the system comprising:
a first transport frame (220) configured to be attached to the inner structure (240),
a second transport frame (222) configured to be attached to the inner structure (240) or to a main frame (250) attached to the nacelle or nacelle module,
wherein the first and second transport frame (220,222) have a carrier interface (224) for a lift adaptor (226,228).

2. A transport system according to claim 1, wherein the inner structure (240) of the nacelle or nacelle module is made of steel.

3. A transport system according to claim 1 or 2, wherein the inner structure (240) of the nacelle or nacelle module comprises a front end (204) and a rear end (206) located opposite each other along a longitudinal direction of the nacelle or nacelle module, first and second sides (208,210), located opposite each other along a transversal direction of the nacelle or nacelle module and top and bottom sides (212,214), located opposite each other a along a height (H) of the nacelle or nacelle module.

4. A transport system according to any of the claims 1 to 3, wherein the inner structure (240) of the nacelle or nacelle module comprises a front end area (216) and a rear end area (218) located opposite each other along a longitudinal direction of the nacelle or nacelle module and comprising the front end (204) or rear end (206) and the adjacent areas of the first and second sides (208,210) and of the top and bottom sides (212,214).

5. A transport system according to claim 4, wherein the first transport frame (220) is attached to a rear end area (218) of the inner structure (240) of the nacelle or nacelle module.

6. A transport system according to any of the preceding claims 4 or 5, wherein the second transport frame (222) is attached to a front end area (216) of the inner structure (240) of the nacelle or nacelle module, or to a main frame (250) attached to the nacelle or nacelle module.

7. A transport system according to any of the preceding claims 1 to 5,
- wherein a lower transport frame (256) is attached to the bottom side of the main frame (250) and
- wherein the second transport frame (256) is attached to the lower transport frame (256).

8. A transport system according to claim 7, wherein a connector frame (254) is arranged between the lower transport frame (256) and the main frame (250).

9. A transport system according to any of the claims 7 or 8, wherein the main frame (250) comprises a protruding portion (252).

10. A transport system according to claim 9, wherein the second transport frame (256) is attached to the protruding portion (252) of the main frame (250) and to the lower transport frame (256).

11. A transport system according to any of the preceding claims, comprising a transport equipment with two lift adaptors (226,228) connected to the carrier interface (224) of the first and second transport frame (220,222).

12. A first or second transport frame (220,222) for use in a transport system according to claim 11, wherein the structure of the transport frame is rectangular or has any other appropriate shape.

13. A first or second transport frame for use in a transport system according to any of the claims 1 to 6, wherein the frame comprises connecting interfaces (223) for the inner structure of the nacelle or nacelle module.

14. A method of transporting a nacelle (106) or a nacelle module (200,202), comprising:
- providing a first transport frame (220) and a second transport frame (222),
- attaching the first transport frame (220) to the rear end area (218) of a nacelle or nacelle module,
- attaching the second transport frame (222) to the front end area (216) of the nacelle or nacelle module or to a main frame (250) attached to the nacelle or nacelle module,
- attaching the first and second transport frames (220,222) to a lift adaptor (226,228) of a transport equipment,
- lifting by the lift adaptor the nacelle or nacelle module and
- transporting the nacelle or nacelle module.
